Europäisches Patentamt

European Patent Office

Office européen des brevets

(19)

(11) **EP 1 180 276 B1**

(12) **EUROPÄISCHE PATENTSCHRIFT**

(45) Veröffentlichungstag und Bekanntmachung des Hinweises auf die Patenterteilung:
**07.12.2005 Patentblatt 2005/49**

(21) Anmeldenummer: **00926984.6**

(22) Anmeldetag: **18.04.2000**

(51) Int Cl.⁷: **H04L 9/08**, H04L 9/32

(86) Internationale Anmeldenummer:
**PCT/EP2000/003512**

(87) Internationale Veröffentlichungsnummer:
**WO 2000/072502 (30.11.2000 Gazette 2000/48)**

(54) **VERFAHREN ZUM VERIFIZIEREN DER UNVERSEHRTHEIT UND URHEBERSCHAFT SOWIE ZUM VER- UND ENTSCHLÜSSELN VON TEXTEN**

METHOD FOR VERIFYING THE INTEGRITY AND AUTHORSHIP OF, AND ENCODING AND DECODING TEXTS

PROCEDE DE VERIFICATION DE L'INTEGRITE ET DE L'AUTEUR DE TEXTES ET DE CODAGE ET DECODAGE DE CES TEXTES

(84) Benannte Vertragsstaaten:
**AT BE CH CY DE DK ES FI FR GB GR IE IT LI LU MC NL PT SE**

(30) Priorität: **22.05.1999 DE 19923590**
**31.05.1999 DE 19924726**
**28.06.1999 DE 19929601**
**03.09.1999 DE 19942082**
**16.09.1999 DE 19944595**
**25.09.1999 DE 19946004**
**07.03.2000 DE 10010365**

(43) Veröffentlichungstag der Anmeldung:
**20.02.2002 Patentblatt 2002/08**

(73) Patentinhaber: **SC-Info+Inno GmbH+Co.**
**83620 Feldkirchen (DE)**

(72) Erfinder: **BENZLER, Hartwig**
**D-83620 Feldkirchen/W. (DE)**

(56) Entgegenhaltungen:
**WO-A-98/00947        FR-A- 2 760 871**
**US-A- 5 228 084**

**Beschreibung**

Im Gegensatz zur eigenhändigen Unterschrift eines Dokuments ist die als ihr Ersatz bei einer elektronisch übermittelten Mitteilung verwendete digitale Signatur nicht unmittelbar als Schrift wahrnehmbar und dauerhaft auf Papier niedergelegt. Sie wird direkt nach dem Empfang der Mitteilung elektronisch überprüft. Grund hierfür ist, dass sie sich nur durch eine sehr lange Zahl mit Hunderten von Dezimalstellen darstellen lässt und außerdem zu ihrer Verifizierung einen ebenso langen öffentlichen Schlüssel benötigt.

Die digitale Signatur (auch als elektronische Signatur bezeichnet) erfordert die dauernde Erreichbarkeit des zuständigen Trustcenters, um prüfen zu können, ob der öffentliche Schlüssel noch gültig ist. Wie die Erfahrung zeigt, können Internetdienste mutwillig blockiert werden. Ein solcher Ausfall des Zugangs zum Trustcenter würde die rechtswirksame Verwendung der digitalen Signatur zeitweilig außer Kraft setzen.

Aufgabe der Erfindung ist es, den beiden genannten Unzulänglichkeiten der digitalen Signatur abzuhelfen durch ein verbessertes Verfahren zur Sicherung der Echtheit und Unversehrtheit von Dokumenten, die konventionell oder elektronisch übermittelt oder einfach nur dauerhaft aufbewahrt werden sollen. Eine weitere Aufgabe der Erfindung ist, unter Verwendung der dem neuen Verfahren eigentümlichen Einweg-Algorithmus-Geheimzahl die mit digitaler Signatur unterzeichneten Texte zu ver- und entschlüsseln.

Was das Ver- und Entschlüsseln von Texten anbetrifft, so sind Verfahren bekannt, bei denen Mitteilungen beim Absender mit einem ihm eigenen Sicherheits-Schlüssel verschlüsselt, in einer sicheren Zentralstation oder in einem sicheren Modul mit einem Doppel dieses Sicherheits-Schlüssels entschlüsselt und mit einem Doppel des dem Empfänger eigenen Sicherheits-Schlüssels verschlüsselt werden, um schließlich vom Empfänger mit dessen Sicherheits-Schlüssel entschlüsselt zu werden. Bei einem dieser Verfahren (WO 98/00947) werden die Doppel der Sicherheits-Schlüssel aller Teilnehmer in einer bei der Zentralstation eingerichteten Datenbank zusammen mit jeweils einem den Teilnehmer bezeichnenden Index-Schlüssel aufbewahrt und für Absender und Empfänger der Mitteilung dadurch aktiviert, dass der Index-Schlüssel des Absenders und derjenige des Empfängers in die Datenbank eingegeben werden. Ein Nachteil dieses Verfahrens besteht darin, dass ein Angreifer die Mitteilung des Absenders abfangen kann, um den Index-Schlüssel des Empfängers im unverschlüsselten Main Header der Mitteilung durch seinen eigenen zu ersetzen und die so gefälschte Mitteilung an die Zentralstation weiterzuleiten, von woher er schließlich einen Kryptotext erhält, den er mit seinem eigenen Index-Schlüssel entschlüsselt. Ein zweiter Nachteil dieses Verfahrens ist das Fehlen von Sicherheitsvorkehrungen gegen die Aufnahme von gefälschten Index-Schlüsseln in die Datenbank. Die weitere Aufgabe der Erfindung ist es also, diese beiden Nachteile der beschriebenen verschlüsselten Übermittlung von Texten abzustellen.

Das erfindungsgemäße Verfahren ist im Hauptanspruch und den Unteransprüchen beschrieben. Der erste Grundgedanke der Erfindung besteht darin, den Text anstelle einer eigenhändigen Unterschrift oder zusätzlich zu dieser mit einem aus dem Text und der Identität des Verfassers abgeleiteten Vermerk zu versehen, der im Gegensatz zur elektronischen Signatur kurz genug ist, um auf Papier platzsparend niedergelegt zu werden und visuell ohne Mühe gelesen werden kann. Der zweite Grundgedanke der Erfindung besteht darin, die Echtheit des Textes mit Hilfe dieses Vermerks in einem autonomen Modul zu verifizieren. Der dritte Grundgedanke der Erfindung ist die Erkenntnis, dass das schon einmal vorhandene Modul mit einer einfachen Ergänzung eine zusätzliche Funktion übernehmen kann, nämlich die symmetrische Verschlüsselung und Entschlüsselung von Texten, die zwischen zwei Teilnehmern am Verfahren ausgetauscht werden, ohne dass der Text durch einen Angreifer umgeleitet werden kann.

Neben einem zwei Zahlen enthaltenden Vermerk nach Anspruch 1 besteht ein erfinderischer Vermerk vorzugsweise nach Anspruch 3 aus drei Zahlen, dem so genannten numerischen Impressum

| K = | 72085 | 33172 | 74938 |
| --- | --- | --- | --- |
| S = | 04381 | 80478 | 53911 |
| U = | 42866 | 39105 | 82053 |

Die erste Zahl K des numerischen Impressums ist eine für den Unterzeichner des Textes charakteristische Kennung, die beispielsweise aus seinem Namen abgeleitet sein kann. Die zweite Zahl, das Siegel S, garantiert die Unversehrtheit des Textes. S errechnet sich mit einem allgemein zugänglichen Einwegalgorithmus aus allen im Text verwendeten Zeichen und aus ihrer Anordnung. Die dritte Zahl U wird als numerische Unterschrift bezeichnet und identifiziert den Unterzeichner. U berechnet sich aus dem Siegel S ausschließlich mit Mitteln unter der alleinigen Kontrolle des Unterzeichners, also im einfachsten Fall mit einem Einwegalgorithmus, der durch eine Geheimzahl G des Unterzeichners aktiviert wird.

Jeder, der den Text zu Gesicht bekommt, hat die Möglichkeit, sich von seiner Unversehrtheit und Authentizität zu überzeugen, und zwar folgendermaßen: Zunächst wird S neu berechnet und mit dem im Impressum enthaltenen Wert verglichen. Dann wird das numerische Impressum telefonisch, per Fax oder über das Internet an ein speziell eingerichtetes und allgemein zugängliches autonomes Modul weitergeleitet, in dem die drei voneinander abhängigen Zahlen des Impressums einer Analyse unterzogen werden. Als Ergebnis dieser von außen her weder erkenn noch beeinflussbaren Prüfung übermittelt das Modul dem Einsender eine Meldung, entweder "Impressum gültig" oder aber "Impressum ungültig". Sicherheitshalber können, falls das Modul ausfällt, separat erreichbare Duplikate zur Verfügung stehen.

Das erfinderische Verfahren löst die grundsätzliche Aufgabe, die Echtheit eines elektronisch übermittelten Textes nicht nur beim Empfang zu verifizieren, sondern auch später zu beliebiger Zeit visuell zu überprüfen. Insofern ersetzt das numerische Impressum vollkommen die Funktion einer dauerhaft auf Papier niedergelegten eigenhändigen Unterschrift.

Die im Impressum enthaltene numerische Unterschrift erfüllt die Anforderungen einer "fortgeschrittenen elektronischen Signatur" nach Artikel 2 der Richtlinie 1999/93/EG des Europäischen Parlaments und des Rates vom 13. Dezember 1999 über gemeinschaftliche Rahmenbedingungen für elektronische Signaturen und hat somit bei Vorliegen der übrigen qualifizierten Rahmenbedingungen automatisch die Rechtswirksamkeit einer eigenhändigen Unterschrift.

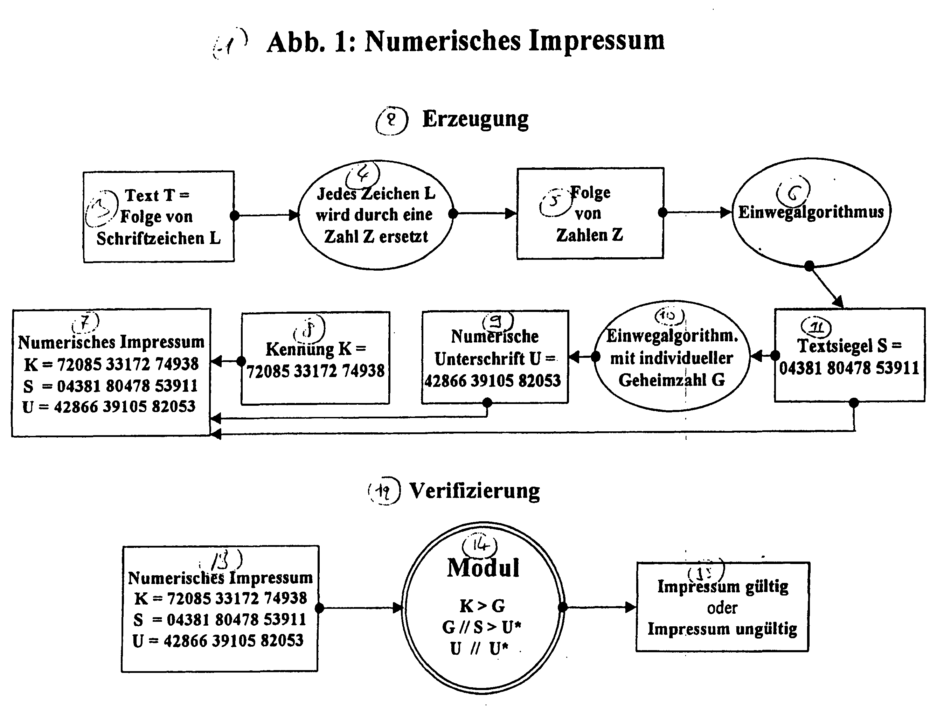

Das Prinzip der Erzeugung und Verifizierung des Impressums mit numerischer Unterschrift ist in Abbildung 1 dargestellt. Zum Erzeugen wird zunächst aus dem Text und seiner Anordnung mit einem allgemein zugänglichen Einwegalgorithmus das Siegel S und hieraus die numerische Unterschrift U mit einem Einwegalgorithmus mit individueller Geheimzahl G des Unterzeichners berechnet. G wird sicherheitshalber verschlüsselt in einer Chipkarte oder einer Diskette aufbewahrt und für den Gebrauch nach einer Authentisierung des Eigentümers bereitgestellt.

Zur Verifizierung des Impressums wird zunächst das Siegel S aus allen im Text verwendeten Zeichen und aus ihrer Anordnung neu errechnet und mit dem S-Wert des Impressums verglichen. Dann wird das Impressum in ein autonomes, per Telekommunikation erreichbares, automatisch funktionierendes, von außen her unausspähbares Modul eingegeben. In einer Datenbank des Moduls sind Doppel der Geheimzahlen G aller Teilnehmer zusammen mit ihrer jeweiligen Kennung K aufbewahrt und nach Eingabe eines bestimmten K verfügbar. Eine vertrauenswürdige Instanz, z.B. ein Notar, kontrolliert die Zugehörigkeit des K-Wertes zu einem bestimmten Eigentümer, bevor das entsprechende Wertepaar K↔G in die Datenbank aufgenommen wird. Einmal eingegebene Wertepaare K↔G bleiben im Modul für immer verschlossen.

Nach Eingabe des Impressums wird im Modul mit dem zu K gehörenden G und dem Einwegalgorithmus aus S die numerische Unterschrift U* neu berechnet, ohne dass U* außerhalb des Moduls bekannt würde. Nur das Ergebnis des Vergleichs zwischen dem in das Modul eingegebenen Original-U und dem neuberechneten U* gelangt nach draußen.

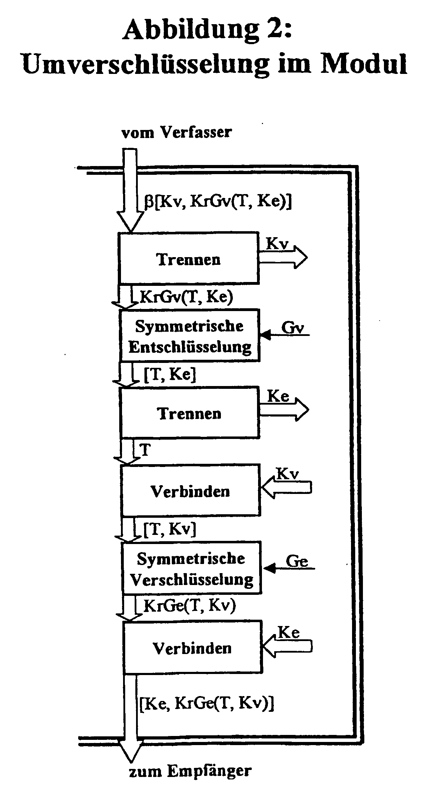

Das von der zuverlässigen Instanz kontrollierte autonome Modul mit der Datenbank für die Wertepaare K↔G eignet sich zur Realisierung eines angriffssicheren symmetrischen Verschlüsselungsverfahrens. Zwei Teilnehmer kommunizieren nach Anspruch 5 wie folgt verschlüsselt über das Modul: Der Verfasser V eines Textes T verschlüsselt letzteren und die Kennung Ke des Empfängers E mit dem symmetrischen Kryptoalgorithmus und seiner Geheimzahl Gv und sendet den erhaltenen Kryptowert KrGv(T, Ke) mit seiner Kennung Kv zum Modul, unter Beifügung eines Programmablaufbefehls β. Dort erfolgt unter Verwendung von Kv die Freigabe von Gv und die Entschlüsselung des eingegangenen Kryptowertes KrGv(T, Ke) mit dem symmetrischen Kryptoalgorithmus. Hierdurch wird der Text T und Ke verfügbar. Die Eingabe von Ke in die Datenbank setzt die Geheimzahl Ge des Empfängers frei. Mit Ge und dem symmetrischen Kryptoalgorithmus wird der Text T und die Kennung Kv verschlüsselt. Der entstandene Kryptowert KrGe(T, Kv) wird mit Ke versehen und gelangt vom Modul zum Empfänger, der ihn mit Ge und dem symmetrischen Kryptoalgorithmus entschlüsselt. Abbildung 2 zeigt dies Umverschlüsselungsverfahren im Modul. Durch die erfindungsgemäße Verschlüsselung der Kennung Ke des Empfängers beim Absender wird ausgeschlossen, dass ein Angreifer die Nachricht vor dem Modul abfängt, Ke durch seine eigene Kennung ersetzt und über das Modul an sich selbst umleitet.

Die Wertepaare K↔G können nach Anspruch 6 in verschiedener Weise in die Datenbank des Moduls eingegeben werden. Bei der ersten Alternative gibt die vertrauenswürdige Instanz die Kennung K in das Modul ein, worauf dort eine Geheimzahl G erzeugt und an den zukünftigen Teilnehmer auf sicherem Weg ausgegeben wird, etwa auf zwei Chipkarten, die je die Hälfte der Ziffern enthalten und dem Teilnehmer getrennt und verschlossen zugehen. Im Modul wird aus der Kennung K und der Geheimzahl G das Wertepaar K↔G gebildet und in die Datenbank aufgenommen. Bei dieser Alternative braucht sich der zukünftige Teilnehmer bei der Initialisierung nicht persönlich zur vertrauenswürdigen Instanz zu begeben, denn er kann sich bei einer amtlich zugelassenen Stelle in seiner Nähe identifizieren lassen, die seine Kennzahl und Personalien an die Instanz weiterleitet, etwa als eine mit Impressum unterzeichnete elektronische Nachricht.

Bei der zweiten Alternative gibt die vertrauenswürdige Instanz die Kennung K und der zukünftige Teilnehmer seine Chipkarte oder Diskette mit der verschlüssel gespeicherten Geheimzahl G in das System ein. Nachdem sich der Teilnehmer authentisiert und dadurch die unverschlüsselte Geheimzahl G für das System verfügbar gemacht hat, werden K und G an das Modul übermittelt.

Entsprechend einer dritten Alternative verschlüsselt der zukünftige Teilnehmer die Geheimzahl G mit einem asymmetrischen Kryptoalgorithmus, bevor er sie in dieser Form zusammen mit seiner Kennung K der vertrauenswürdigen Instanz zur Eingabe in das Modul übermittelt. Innerhalb des Moduls wird G vor der Eingabe in die Datenbank entsprechend entschlüsselt.

Bei allen drei Alternativen können die in das Modul einzugebenden Daten, bevor sie dort anlangen, von der vertrauenswürdigen Instanz mit einem symmetrischen Kryptoalgorithmus verschlüsselt werden, um innerhalb des Moduls vor der Aufnahme in die Datenbank entsprechend entschlüsselt zu werden. Hiermit wird eindeutig sichergestellt, dass niemand anders als die Instanz neue Wertepaare K↔G in die Datenbank einbringen kann. Im Ergebnis garantieren alle Alternativen, dass keine Geheimzahl G mit gefälschter Kennung K in das Modul gelangt, und weiter, dass die Instanz die eingegebenen G-Werte nicht erfährt.

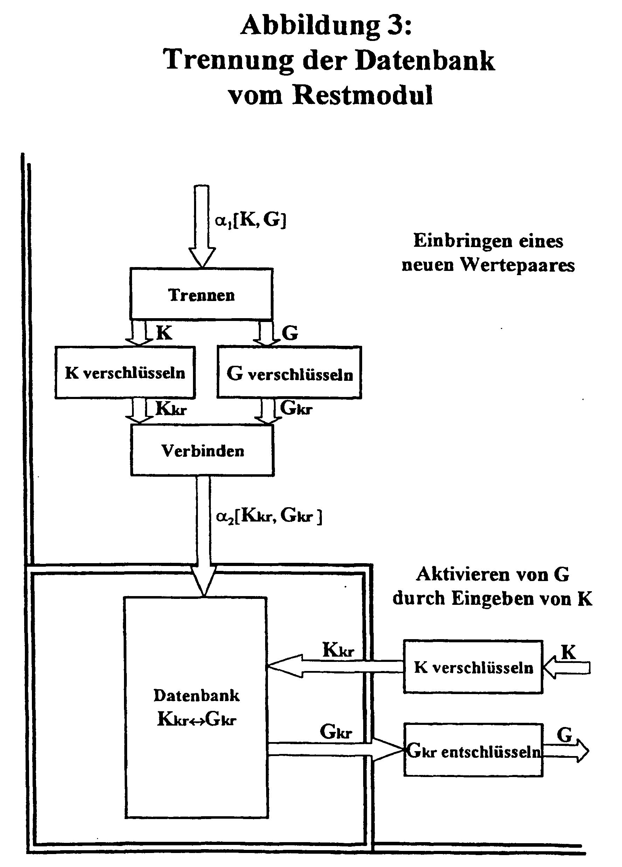

Eine verschlüsselte Einbringung, Aufbewahrung und Nutzung der Werte K und G in der Datenbank entsprechend Anspruch 3 und 4 gestattet es, die Datenbank für Wartungsarbeiten oder zum Zwecke des Anlegens von Sicherheitskopien leichter zugänglich zu machen. Selbst wenn ein Angreifer bei derartigen Ausnahmesituationen Kenntnis von den in der Datenbank gespeicherten G- bzw. K-Werten erhielte, könnte er mit ihnen nichts anfangen, weil er sie nicht entschlüsseln kann. Es liegt im Rahmen der Erfindung, eine entsprechend Anspruch 3 und 4 gestaltete Datenbank räumlich vom übrigen Modul mit seinen Algorithmen und Programmabläufen zu trennen. In Abbildung 3 ist dargestellt, wie ein neues Wertepaar [K, G] unter Beifügung eines Programmablaufbefehls $\alpha_1$ verschlüsselt in die gesonderte Datenbank gelangt und dort als Wertepaar $K_{kr}$↔$G_{kr}$ gespeichert wird. Weiter zeigt Abbildung 3, wie nach Aufruf eines K-Wertes im Restmodul durch Kommunikation mit der verschlüsselten Datenbank der zugehörige G-Wert verfügbar wird.

In den Ansprüchen 7 und 8 sind die für den Betrieb der Datenbank erforderlichen Algorithmen spezifiziert, ohne die das erfinderische Verfahren nicht implementiert werden kann. Es versteht sich von selbst, dass ähnliche oder gar unterschiedliche Einweg- und Krypto-Algorithmen mit einer Geheimzahl als Parameter ebenfalls für die Realisierung des in den Ansprüchen 1 bis 6 beschriebenen Verfahrens mit seinen Ausgestaltungen verwendet werden können.

Stellt nach Anspruch 7 die Folge von Schriftzeichen einen Text T dar, so ist die charakteristische Zahl Bt das Textsiegel S(T), wenn die Ziffern $c_n$ von C veröffentlicht sind. Bleiben die Ziffern $c_n$ von C geheim, so ist C die Geheimzahl G, und Bt die numerische Unterschrift U(S). In beiden Fällen ist es zweckmäßig, zum Aufbau von Bt nur wenige $b_n$ der Gesamtmenge aller $b_n$ heranzuziehen, etwa die ersten fünfzehn. S(T) kann als Kennung K verwendet werden, wenn der. Text aus den standardisierten Koordinaten eines Teilnehmers besteht. Hat die Zahl C sehr viele Stellen und werden zum Aufbau von Bt viele oder alle $b_n$ herangezogen, so läßt sich mit dem Einwegalgorithmus aus einer beliebigen kurzen Schriftzeichenfolge eine sehr große Zahl Bt erzeugen, die als individuelle Geheimzahl G verwendet werden kann. Der Einwegalgorithmus garantiert, dass Bt nicht durch Probieren aus T gewonnen werden kann und dass es nicht zwei unterschiedliche Werte T gibt, welche denselben Bt-Wert liefern.

Bei dem symmetrischen Kryptoalgorithmus nach Anspruch 8 ist es nicht nötig, auf die Bit-Ebene zurückzugehen wie bei den CAST-, IDEA- und Triple-DES-Algorithmen. Da G mindestens so viele Ziffern g haben muss, dass jedem Schriftzeichen L des Textes ein g zugeordnet werden kann, empfiehlt es sich für die Bearbeitung längerer Texte, in der Geheimzahlbank G-Werte mit vielen, z.B. 1000 Ziffern zu verwenden, von denen bei Bedarf nur ein Teil verwendet wird.

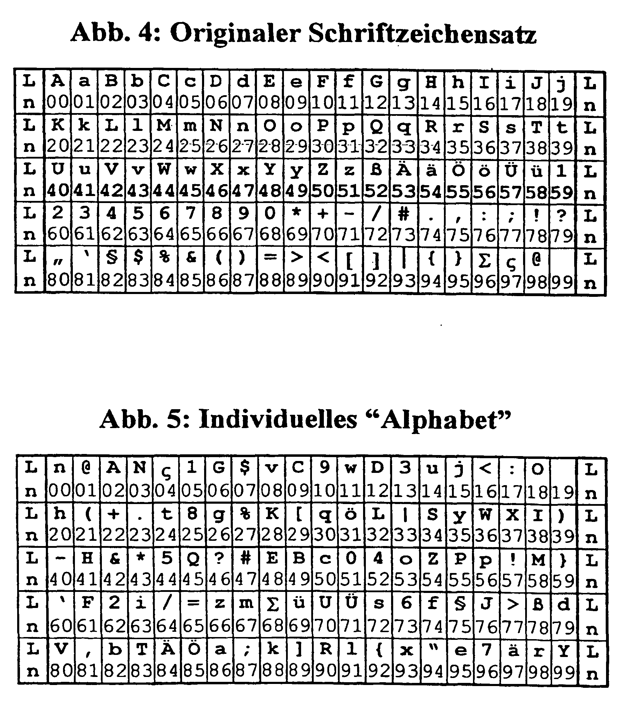

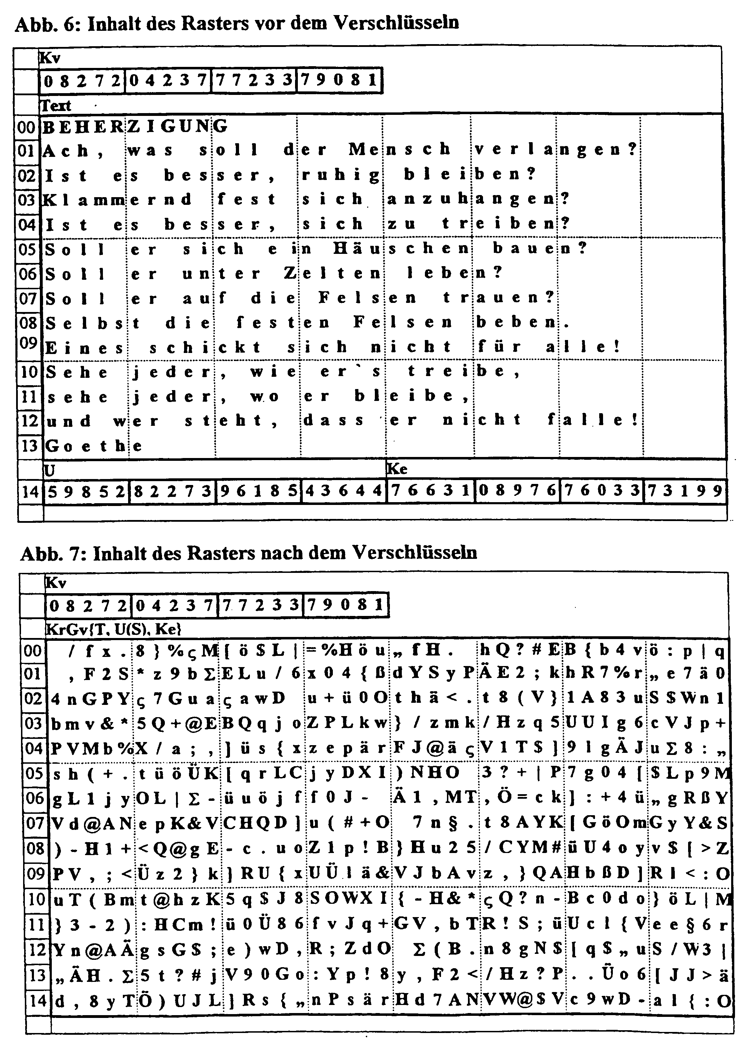

Abbildung 5 zeigt ein typisches individuelles "Alphabet", wie es sich als Phase a) einer symmetrischen Verschlüsselung nach Anspruch 8 aus den Zeichen L des Schriftzeichensatzes von Abbildung 4 mit den ersten hundert Ziffern der 1000-stelligen Geheimzahl G = 09480 51849 ..... 15424 64281 berechnet. Abbildung 7 stellt das Ergebnis dar der Verschlüsselung des Textes der Abbildung 6, einschließlich der dort vermerkten Werte von U(S) und Ke. Der Gesamtinhalt der Abbildung 7, nämlich der Ausdruck [Kv, KrGv{T, U(S), Ke}] wird mit dem Programmablaufbefehl β entsprechend Abbildung 2 zum Modul gesendet, dort umgeformt, und als Ausdruck [Ke, KrGe{T, U(S), Kv}] dem Empfänger übermittelt. In Abbildung 6 ist zur Vereinfachung statt des Impressums I nur die numerische Unterschrift U unter dem Text vermerkt, während die Verfasserkennung Kv oberhalb des Textes angegeben ist.

Anspruch 9 beschreibt eine Möglichkeit zur verschlüsselten Aufbewahrung der Geheimzahl, die aus Sicherheitsgründen für das erfinderische Verfahren unabdingbar ist, und zu ihrer Rekonstruktion, die den Vorteil hat, ohne PIN auszukommen.

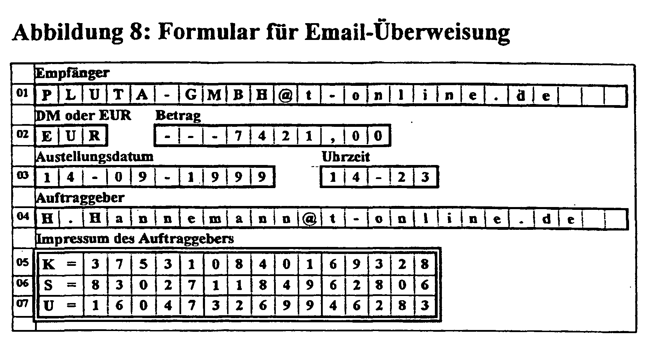

Das numerische Impressum als Äquivalent einer dauerhaft auf Papier niedergelegten eigenhändigen Unterschrift kann beispielsweise zur vereinfachten und beschleunigten Überweisung von Geldbeträgen durch Emails genutzt werden (Abbildung 8). Das Kreditinstitut eröffnet für jeden Kunden unter dessen Email-Adresse ein Konto. Eine Überweisung verläuft folgendermaßen: Der Auftraggeber füllt am PC die Zeilen 01 bis 04 des Formulars aus. die Software berechnet aus diesen Zeichen zunächst das Siegel S und danach, nachdem der Auftraggeber seine Chipkarte oder Diskette eingelegt hat, aus S die numerische Unterschrift U. Beide Zahlen werden in die Zeilen 06 und 07 des Formulars eingetragen und ergeben zusammen mit der Kennung K des Kunden in Zeile 05 sein Impressum. Das dermaßen vervollständigte Formular wird an das Kreditinstitut gemailt. Wenn das Konto des Kunden gedeckt ist und sein Impressum vom Kreditinstitut durch Kontakt mit dem autonomen Modul verifiziert wurde, wird der im Formular angegebene Betrag auf das Konto des Empfängers gebucht.

Mit einem entsprechenden mit Impressum unterzeichneten Email-Formular kann das Kreditinstitut dem Empfänger einen Bestätigungsvermerk zukommen lassen, der damit sofort über seine Gutschrift verfügen kann. Hat der Empfänger noch kein Email-Konto bei dem Kreditinstitut, so bietet letzteres ihm eine Neueröffhung an und schreibt ihm danach den angewiesenen Betrag gut. Verzichtet der Empfänger auf dies Konto, so überweist ihm das Kreditinstitut sein Guthaben auf konventionellem Weg.

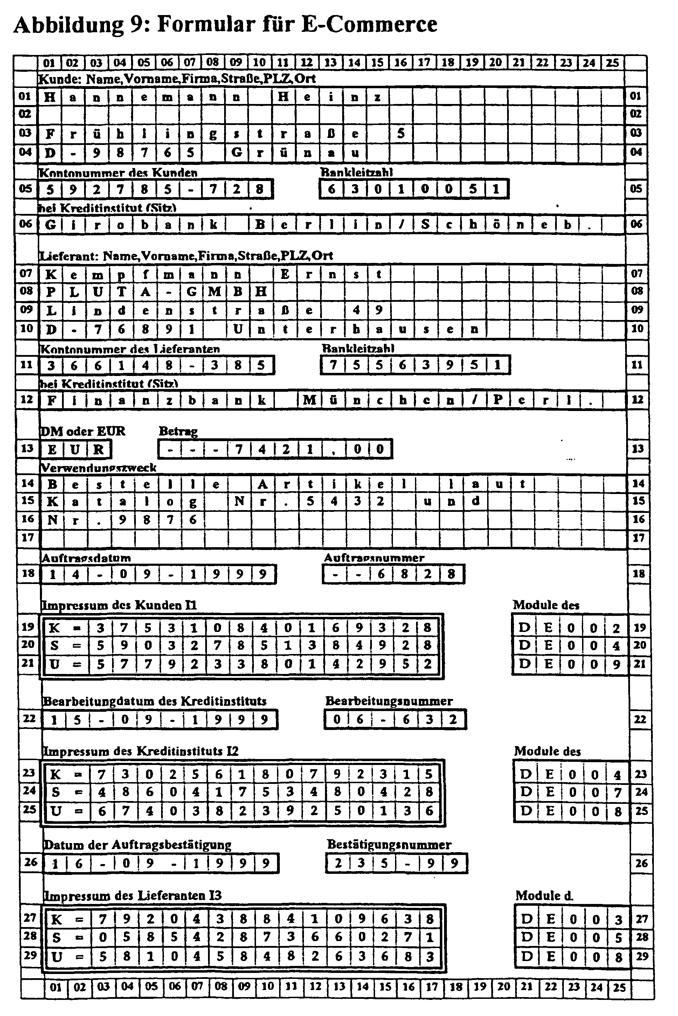

Ein anderes Anwendungsbeispiel des Impressums ist der E-Commerce (Abbildung 9). Der Kunde füllt auf dem Bildschirm seines PC die Zeilen 01 bis 18 des Formulars aus, die Software berechnet aus diesen Zeichen zunächst das Siegel S und danach, ausschließlich mit Mitteln unter der alleinigen Kontrolle des Kunden, aus S die numerische Unterschrift U. Beide Zahlen werden in die Zeilen 20 und 21 des Formulars eingetragen und ergeben zusammen mit der Kennung K des Kunden in Zeile 19 sein Impressum 11. Das dermaßen vervollständigte Formular wird an das Kreditinstitut gesandt.

Wenn das Konto des Kunden gedeckt ist und I1 vom Kreditinstitut durch Kontakt mit einem der identischen autonomen Module des Kunden (DE002, DE004 oder DE009) verifiziert wurde, wird der im Formular angegebene Betrag auf ein Verrechnungskonto gebucht und ein Bestätigungsvermerk des Kreditinstituts in die Zeile 22 des Formulars eingetragen. Die Software berechnet aus den Zeichen der Zeilen 01 bis 22 zunächst das entsprechende Siegel S und danach, ausschließlich mit Mitteln unter der alleinigen Kontrolle des Kreditinstituts, aus S die numerische Unterschrift U. Beide Zahlen werden in die Zeilen 24 und 25 des Formulars eingetragen und ergeben zusammen mit der Kennung K des Kreditinstituts in Zeile 23 dessen Impressum 12. Das dermaßen vervollständigte Formular wird an den Lieferanten gesandt.

Nachdem dieser 12 durch Kontakt mit einem der identischen autonomen Module des Kreditinstituts (DE004, DE007 oder DE008) verifiziert hat, führt er den Auftrag aus und setzt seinen Bestätigungsvermerk in die Zeile 26 ein. Die Software berechnet aus den Zeichen der Zeilen 1 bis 26 zunächst das entsprechende Siegel S und danach, ausschließlich mit Mitteln unter der alleinigen Kontrolle des Lieferanten, aus S die numerische Unterschrift U. Beide Zahlen werden in die Zeilen 28 und 29 des Formulars eingetragen und ergeben zusammen mit der Kennung K des Lieferanten in Zeile 27 dessen Impressum 13. Das dermaßen vervollständigte Formular wird an den Kunden gesandt, der zur Sicherheit 13 durch Kontakt mit einem der identischen autonomen Module des Lieferanten (DE003, DE005 oder DE008) verifiziert. Nach ordnungsgemäßen Erhalt der georderten Ware ermächtigt der Kunde sein Kreditinstitut, den Betrag vom Verrechnungskonto auf das Lieferantenkonto zu überweisen.

Das erfinderische Verfahren mit dem numerischen Impressum als Ersatz oder Ergänzung einer eigenhändigen Unterschrift hat den Vorteil, dass Online- und Offline-Betrieb möglich sind, z.B. über das Telefonnetz oder im Email-Betrieb. Erfolgt im Modul eine Umverschlüsselung, so wird im Email-Betrieb vor das Modul eine Mailbox geschaltet, in der alle eintreffenden Emails gesammelt und nacheinander zur Bearbeitung in das Modul gelangen. Nach der Bearbeitung im Modul werden die weiterzuleitenden Emails mit der zur jeweiligen Kennung gehörenden Email-Adresse versehen und den Empfängern zugestellt. Diese Adressen können in einer externen Datenbank registriert sein und nach dem Programmablauf im Modul aus dieser Datenbank entnommen werden.

Weitere Vorteile des erfinderischen Verfahrens gegenüber der elektronischen Signatur sind die einfachen Formalitäten für seine Nutzung, der Wegfall einer komplizierten Infrastruktur zur Schlüsselzertifizierung und der Verzicht auf komplexe und nicht direkt wahrnehmbare Berechnungen in der Bit-Ebene.

Berücksichtigter Stand der Technik:

- Patente DE 198 20 484, DE 40 03 386 C1, US 5,432,506, US 5,228,084, US 5,157,726;
- Patentanmeldungen DE 199 23 590.2-31, DE 199 24 726.9, DE 199 29 601.4, DE 199 42 082.3, DE 199 44 595.8, DE 199 46 004.3, EP 0 782 114 A2, EP 0 516 898 A1, EP 0 161 181 A1, GB 2 211 644 A, FR 2 534 712; WO98/00947 A (PCT/US97/11621;
- M. BURROWS, M- ABADI und R. M. NEEDHAM: A Logic of Authentication. Rep. 39. Digital Equipment Corporation Systems Research Center, Palo Alto, Calif., Feb. 1989;
- Simon GARFINKEL: PGP-Pretty Good Privacy. O'Reilly & Associates Inc., Cambridge1995, S. 46-48;
- H. BENZLER:Authentisierverfahren mit Asoziationen. Datenschutz und Datensicherheit 12/96, S. 723-728.

**Patentansprüche**

**1.** Verfahren zum Verifizieren der Unversehrtheit und Urheberschaft von Texten, bei dem

- jeder Teilnehmer ausgestattet wird mit mindestens:

  ➢ einer ihn charakterisierenden Kennung K;
  ➢ einer individuellen Geheimzahl G;

➢ und einem Einwegalgorithmus, der von der Geheimzahl G abhängt;

- ein nicht ausspähbares und per Telekommunikation zugängliches Modul vorhanden ist, das zumindest enthält:

  ➢ eine Datenbank, in der für jeden Teilnehmer ein aus seiner Kennung K und seiner individuellen Geheimzahl G bestehendes Wertepaar aufbewahrt wird, das nur dann in die Datenbank eingegeben werden kann, wenn der Teilnehmer zuvor seine Identität und Kennung K gegenüber einer vertrauenswürdigen Instanz nachgewiesen hat, und aus der nach Eingabe einer bestimmten Kennung K die zugehörige Geheimzahl G im Modul verfügbar wird;
  ➢ und den von der Geheimzahl G abhängenden Einwegalgorithmus;

- ein Teilnehmer mit seiner Geheimzahl G und seinem Einwegalgorithmus aus den Textzeichen und ihrer Anordnung eine den Text und ihn selbst identifizierende charakteristische Zahl berechnet und den Text durch einen Vermerk kennzeichnet, der mindestens die charakteristische Zahl und seine Kennung K enthält;
- zum Zwecke einer Verifizierung:

  ➢ der Text zusammen mit dem Vermerk dem Modul übermittelt wird;
  ➢ im Modul mit der Kennung K die Geheimzahl G freigesetzt wird;
  ➢ mit der Geheimzahl G und dem Einwegalgorithmus im Modul erneut aus dem Text die charakteristische Zahl berechnet und von außen nicht wahrnehmbar mit dem in das Modul eingegeben Original der charakteristischen Zahl verglichen wird;
  ➢ das Ergebnis des Vergleichs einem Teilnehmer, der die Verifizierung eingeleitet hat, mitgeteilt wird.

**2.** Verfahren nach Anspruch 1, **dadurch gekennzeichnet dass**:

- ein Teilnehmer zunächst mit einem allgemein zugänglichen Einwegalgorithmus aus den Textzeichen und ihrer Anordnung eine den Text identifizierende charakteristische Zahl S und danach aus letzterer mit seiner Geheimzahl G und seinem Einwegalgorithmus eine ihn selbst identifizierende charakteristische Zahl U berechnet und den Text durch einen Vermerk kennzeichnet, der mindestens die charakteristische Zahl S, die charakteristische Zahl U und seine Kennung K enthält;
- zum Zwecke einer Verifizierung:

  ➢ ein Teilnehmer, der die Verifizierung eingeleitet hat, mit dem öffentlichen Einwegalgorithmus aus den Textzeichen und ihrer Anordnung erneut die den Text identifizierende charakteristische Zahl S berechnet und mit dem im Vermerk angegebenen Wert vergleicht;
  ➢ der Vermerk dem Modul übermittelt wird;
  ➢ im Modul mit der Kennung K die Geheimzahl G freigesetzt wird;
  ➢ mit der Geheimzahl G und dem Einwegalgorithmus im Modul erneut aus der charakteristischen Zahl S die charakteristische Zahl U berechnet und von außen nicht wahrnehmbar mit dem in das Modul eingegeben Original der charakteristischen Zahl U verglichen wird;
  ➢ das Ergebnis des Vergleichs ein Teilnehmer, der die Verifizierung eingeleitet hat, mitgeteilt wird.

**3.** Verfahren nach Anspruch 1 oder 2, **dadurch gekennzeichnet, dass** die Geheimzahlen G in die Datenbank verschlüsselt eingebracht und dort verschlüsselt gespeichert werden, um zwecks Aktivierung nach Eingabe einer bestimmten Kennung K in die Datenbank in dieser verschlüsselten Form ausgegeben und im Modul mit einem dieser verschlüsselten Form entsprechenden Kryptoalgorithmus entschlüsselt zu werden.

**4.** Verfahren nach Anspruch 3, **dadurch gekennzeichnet, dass** auch die Kennungen K verschlüsselt in die Datenbank eingebracht und dort verschlüsselt gespeichert werden, und dass auf Vorgabe einer bestimmten Kennung K im Modul zwecks Aktivierung der zugehörigen Geheimzahl G diese Kennung K zunächst mit dem beim Einbringen in die Datenbank zum Verschlüsseln der Kennungen K verwendeten Kryptoalgorit hmus verschlüsselt und in dieser Form in die Datenbank eingegeben wird.

**5.** Verfahren nach Anspruch 1 bis 4, **dadurch gekennzeichnet dass**:

- ein Teilnehmer in seiner Eigenschaft als Verfasser V mit seiner Geheimzahl Gv und einem von dieser abhängigen symmetrischen Kryptoalgorithmus seinen Text und die Kennung Ke eines Empfängers E zu einem Kryptotext verschlüsselt;

- zum Zwecke einer Entschlüsselung:

  ➢ der Kryptotext zusammen mit der Kennung Kv des Verfassers dem Modul übermittelt wird;
  ➢ im Modul mit der Kennung Kv die Geheimzahl Gv freigesetzt wird;
  ➢ mit der Geheimzahl Gv und dem ebenfalls im Modul befindlichen symmetrischen Kryptoalgorithmus im Modul der Kryptotext von außen nicht wahrnehmbar zum Klartext und zur Kennung Ke entschlüsselt wird;
  ➢ im Modul mit der Kennung Ke die Geheimzahl Ge freigesetzt wird;
  ➢ mit der Geheimzahl Ge und dem symmetrischen Kryptoalgorithmus im Modul der Klartext und die Kennung Kv von außen nicht wahrnehmbar zu einem Kryptotext verschlüsselt wird;
  ➢ dieser Kryptotext zusammen mit der Kennung Ke dem Empfänger übermittelt wird;

- der Empfänger mit seiner Geheimzahl Ge und seinem symmetrischen Kryptoalgorithmus den Kryptotext zum Klartext und zur Kennung Kv entschlüsselt.

6. Verfahren nach einem oder mehreren der Ansprüche 1 bis 5, **dadurch gekennzeichnet, dass** das Wertepaar aus Kennung K und Geheimzahl G eines neuen Teilnehmers alternativ folgendermaßen über das Modul in die Datenbank eingebracht wird:

  a) Nachdem die vertrauenswürdige Instanz die Kennung K in das Modul eingegeben hat, wird dort automatisch eine Geheimzahl G erzeugt, die zusammen mit der Kennung K in die Datenbank eingegeben und dem Teilnehmer auf sicherem Weg zugeteilt wird.
  b) Die vertrauenswürdige Instanz gibt die Kennung K in das System ein und getrennt hiervon, jedoch in einem einheitlichen Verfahrensschritt, gibt der neue Teilnehmer seine Geheimzahl G ein. Hiernach gelangt das Wertepaar in die Datenbank.
  c) Der neue Teilnehmer verschlüsselt seine Geheimzahl G mit einem asymmetrischen Kryptoalgorithmus, bevor er sie in dieser Form zusammen mit seiner Kennung K der vertrauenswürdigen Instanz zur Eingabe in das System übermittelt; innerhalb des Moduls wird die Geheimzahl G zunächst mit einem dort vorhandenen entsprechenden asymmetrischen Kryptoalgorithmus entschlüsselt.
  d) Die in das Modul einzugebenden Daten werden, bevor sie dort anlangen, mit einem symmetrischen Kryptoalgorithmus verschlüsselt; innerhalb des Moduls werden sie zunächst mit einem dort vorhandenen entsprechenden symmetrischen Kryptoalgorithmus entschlüsselt.

7. Verfahren nach Anspruch 1 oder 2, **dadurch gekennzeichnet, dass**:

- der Text aus einer Folge von Schriftzeichen L besteht;
- der Einwegalgorithmus von einer Zahl C mit den Ziffern $c_n$ abhängt;
- aus der Einwegtransformation des Textes eine Zahl B mit den Ziffern $b_n$ berechnet wird, wobei die Menge aller $b_n$ entweder der Anzahl aller L oder aller $c_n$ entspricht;
- als charakteristische Zahl $B_t$ eine Teilmenge aller Ziffern $b_n$ der Zahl B verwendet wird und
- die Berechnung der charakteristischen Zahl genau oder sinngemäß folgendermaßen abläuft:

  a) Die L werden durch ihre Ordnungszahl Z im verwendeten Schriftzeichensatz oder eine andere charakteristische Zahl Z ersetzt.
  b) Die Z werden von n = 0 bis n = fin durchnumeriert.
  c) Aus der so erzeugten Folge von Zahlen $Z_n$ werden die $b_n$ in einer einfachen oder mehrfachen Iteration von n = 0 bis n = fin und von n = fin bis n = 0 mit den Formeln

$$a_n = \text{Rest}[\text{Ganzzahl}\{(Z_n + c_n + r_n)\text{\textasciicircum}2;10\text{\textasciicircum}c3\}]$$

$$r_0 = c1$$

$$r_{n+1} = a_n$$

$$b_n = \text{Rest}(a_n; 10)$$

berechnet, in denen c1, c2 und c3 Konstanten sind.

**8.** Verfahren nach Anspruch 5, **dadurch gekennzeichnet, dass**:

- der Text aus einer Folge von Schriftzeichen L besteht;
- die Geheimzahl G aus mindestens soviel Ziffern g besteht, dass jedem Schriftzeichen L eine Ziffer g zugeordnet werden kann;
- der symmetrische Kryptoalgorithmus von der Geheimzahl G abhängt;
- die Verschlüsselung/Entschlüsselung von Klar-/Kryptotexten, die aus dieser Schriftzeichenfolge bestehen, genau oder sinngemäß folgendermaßen abläuft:

a) Erzeugen eines individuellen "Alphabets":

o Die Zeichen L des vorgegebenen Schriftzeichensatzes (einschließlich eines Leerzeichens) werden durchnumeriert von p1 = 0 bis p1 = fin 1. Es entstehen die x-stelligen Ordnungszahlen p1 = 1, 2, 3 usw. Jedem p1 wird der entsprechende g-Wert der Geheimzahl G zugeordnet.
o Die zugeordneten g-Werte werden um eine Einheit, zwei Einheiten und drei Einheiten zyklisch verschoben, wodurch neue Zahlenfolgen mit den Ziffern g', g" und g"' entstehen.
o Aus zusammengehörigen p1 und g, g', g" und g"' wird die Folge der zusammengesetzten Zahlen Zsort gebildet:

$$\text{Zsort} = 10^{(x+3)}*g+10^{(x+2)}*g'+10^{(x+1)}*g''+10^x*g'''+p1$$

o Die Folge der Zsort wird nach steigender Größe geordnet und in dieser Anordnung durchnumeriert von p2 = 0 bis p2 = fin1. Es entstehen die x-stelligen Ordnungszahlen p2 = 1, 2, 3 usw., aus den geordneten p1 die Permutation P 1 dieser Zahlen und aus den Zeichen L des vorgegebenen Schriftzeichensatzes ein individuelles "Alphabet".
o Werden die p1 wieder nach steigender Größe angeordnet, so entsteht aus den p2 die Permutation P2 dieser Zahlen.

b) Substitution:

o Alle Schriftzeichen L des Originaltextes (einschließlich der Leerzeichen) werden durchnumeriert von p1 * = 0 bis p1 * = fin2. Es entstehen die x-stelligen Ordnungszahlen p1* = 1, 2, 3 usw. Jedem p1* wird der entsprechende g-Wert der Geheimzahl G zugeordnet.
o Mit den g-Werten werden nach dem unter a) beschriebenen Verfahren die beiden voneinander abhängige Permutationen P1 * (bei geordneten p2*) und P2* (bei geordneten p1*) erzeugt.
o Jedem Zeichen L des Originaltextes werden seine Ordnungszahl p2 im individuellen "Alphabet" und die Zahlen p2* der Permutation P2* zugeordnet.
o Durch modulare Addition der p2- und p2*-Werte ergeben sich Zahlen p3 = Rest(p2+p2*; fin1), die als Ordnungszahlen der substituierten Zeichen Ls im individuellen "Alphabet" definiert werden.
o Die Zahlen p3 werden durch die ihnen im individuellen "Alphabet" zugeordneten Zeichen Ls ersetzt.

c) Transposition:

o Die substituierten Zeichen Ls werden durch Anwenden der Permutation P1 * (Neuordnung der p2* in ansteigender Folge) transponiert. Das Ergebnis ist der Kryptotext mit den Zeichen Lk.

d) Entschlüsselung:

o Die Zeichen Lk werden durch Anwenden der Permutation P2* (Neuordnung der p1* in ansteigender Folge) retransponiert. Man erhält die Folge der Zeichen Ls.
o Jedes Ls wird durch seine Ordnungszahl im individuellen "Alphabet" ersetzt.
o Durch modulare Subtraktion p2 = p3 - p2* ergibt sich die Ordnungszahl des originalen Schriftzeichens L.

o Die Zahl p2 wird durch L ersetzt. Das Ergebnis ist der originale Klartext.

9. Verfahren nach einem oder mehreren der Ansprüche 1 bis 8 **dadurch gekennzeichnet, dass** die Geheimzahl G mit den Ziffern g wie folgt auf einem Speichermedium verschlüsselt aufbewahrt und vor Gebrauch rekonstruiert wird:

- die Folge der Ziffern g wird in zusammenhängende Gruppen unterteilt;
- jede Gruppe wird je einem Bestandteil B einer Anzahl personenspezifischer Assoziationen A⇔B zugeordnet;
- die Assoziationsbestandteile A werden geordnet und die Bestandteile B mit ihrer Gruppe von Ziffern g gemischt auf dem Medium gespeichert;
- für die Rekonstruktion werden nach Einlegen des Mediums in ein Lesegerät die Assoziationsbestandteile A nacheinander und die gemischten B gleichzeitig auf einem Display sichtbar;
- der Eigentümer ordnet der Geheimzahl G das richtige B dem jeweils gezeigten A zu;
- aus der so geordneten Folge von Gruppen der Ziffern g wird die Geheimzahl G zusammengesetzt;
- nach jeder Rekonstruktion werden die Assoziationen A⇔B ohne ihre Gruppe von Ziffern g gemischt, während letztere in ihrer Folge verbleiben;
- jede Gruppe wird je einem Bestandteil B der personenspezifischen Assoziationen A⇔B in deren neuer Ordnung zugeordnet und so weiter.

## Claims

1. Method for the verification of the integrity and authorship of a text comprising the following features:

- Every participant is equipped with at least:

  ➢ a token K characterising the participant;
  ➢ an individual secret code G;
  ➢ and a one-way algorithm depending on the secret code G;

- A module exists which cannot be spied out and which is accessible by telecommunication, containing at least:

  ➢ a data bank, storing for each participant a value pair consisting of his/her token K and his/her individual secret code G, pair which can only be entered in the data bank after the participant has proved his/her identity and token K towards a trustworthy instance, and from which data bank the relevant secret code G will be released within the module after entering a specific token K;
  ➢ and the one-way algorithm depending on the secret code G;

- A participant calculates from the text characters and their disposition with his/her secret code G and his/her one-way algorithm a characteristic number, identifying the text and himself/herself, and marks the text by a note which contains at least the characteristic number and his/her token K.
- For the purpose of verification:

  ➢ the text with the note is transmitted to the module;
  ➢ the secret code G is released within the module by the token K;
  ➢ the characteristic number is recalculated within the module from the text with the secret code G and the one-way algorithm and, not perceivably from the outside, compared with the original of the characteristic number as entered in the module;
  ➢ the result of the comparison is communicated to the verifying person.

2. Method according to claim 1, **characterised in that**:

- A participant first calculates, with a generally accessible one-way algorithm, from the characters of the text and their disposition, a characteristic number S identifying the text, and next from S with his/her secret code G and his/her one-way algorithm, a characteristic number U identifying himself/herself, finally marks the text by a note which contains at least the characteristic number S, the characteristic number U, and his/her token K;
- For the purpose of verification:

➢ the verifying person first recalculates with the public one-way algorithm, from the characters of the text and their disposition, the characteristic number S identifying the text, and compares S with the corresponding value of the note;

➢ the note is sent to the module;

➢ the secret code G is released within the module by the token K;

➢ the characteristic number U is recalculated within the module from the characteristic number S, with the secret code G and the one-way algorithm and, not perceivably from the outside, compared with the original of the characteristic number U as entered in the module;

➢ the result of the comparison is communicated to the verifying person.

**3.** Method according to claims 1 or 2, **characterised in that** the secret codes G are entered in the data bank as ciphers and there are stored **in that** form, in order to be released after input of a specific token K into the data bank as a cipher value, and to be decoded within the module with a cipher algorithm corresponding to that one used for transforming the plain G into the cipher G.

**4.** Method according to claim 3, **characterised in that** also the tokens K are entered in the data bank as cipher values and there are stored **in that** form, and that after calling up a specific token K in the module in order to activate the corresponding secret code G, this token K first is encoded with the cipher used for encoding the tokens K when they are initially entered into the data bank, and then is entered in the data bank in cipher form.

**5.** Method according to claims 1 to 4, **characterised in that**:

- A participant in his/her capacity as an author V encodes with his secret code Gv and a symmetric cipher depending on Gv, his/her plain text and the token Ke of an addressee E, to a cipher text;
- For the purpose of decoding:

  ➢ the cipher text is transmitted with the token Kv of the author to the module;
  ➢ within the module the secret code Gv is released by the token Kv;
  ➢ within the module and not perceivably from the outside, the cipher text is decoded to the plain text and the token Ke, with the secret code Gv and the symmetric cipher equally placed within the module;
  ➢ within the module, the secret code Ge is released by the token Ke;
  ➢ within the module and not perceivably from the outside, the plain text and the token Kv are encoded to a cipher text, with the secret code Ge and the symmetric cipher;
  ➢ this cipher text is transmitted with the token Ke to the addressee;

- The addressee decodes the cipher text to the plain text and the token Kv, with his/her secret code Ge and his/her symmetric cipher.

**6.** Method according to one or more of the claims 1 to 5, **characterised in that** the value pair made up of the token K and the secret code G of a new participant, is entered via the module in the data bank alternatively as follows:

a) The trustworthy instance having entered the token K in the module, a secret code G is generated there automatically, which is entered in the data bank together with the token K, and attributed to the participant on a safe way.

b) The trustworthy instance first enters the token K in the system, and separately, however within a unique programme step, the new participant enters his/her secret code G. Next, the value pair is transferred into the data bank..

c) The new participant encodes his/her secret code G with an asymmetric cipher, before he/she transmits G in this form with his/her token K, to the trustworthy instance for entering in the system; within the module, the secret code G is decoded with a corresponding asymmetric cipher there available.

d) The data to be entered in the module are encoded with a symmetric cipher, before they reach the module; within the module, they are decoded with a corresponding symmetric cipher there available.

**7.** Method according to claim 1 or 2, **characterised in that**:

- the text consists of a sequence of characters L;
- the one-way algorithm depends on a number C with the digits $c_n$;
- a number B with the digits $b_n$ is calculated from the one-way transformation of the text, the quantity of all $b_n$

corresponding either to the number of all L or of all $c_n$;
- a partial quantity of all digits $b_n$ of the number B is used as the characteristic number Bt, and
- the calculation of the characteristic number goes exactly or analogously as follows:

a) The characters L are replaced by their ordinal number Z in the applied set of characters, or by another characteristic number Z.

b) The numbers Z are consecutively numbered from n = 0 to n = fin.

c) From the thus generated sequence of numbers $Z_n$, the digits $b_n$ are calculated by a single or repeated iteration from n = 0 to n = fin, and from n = fin to n = 0, applying the formulas

$$a_n = \text{Mod}[\text{Int}\{(Z_n + c_n + r_n)\char`^c2;10\char`^c3\}]$$

$$r_0 = c1$$

$$r_{n+1} = a_n$$

$$b_n = \text{Rest}(a_n;10)$$

in which c1, c2, and c3 are constants.

**8.** Method according to claim 5, **characterised in that**:

- The text consists of a sequence of characters L;
- The secret code G consists of at least as many digits g as needed to attribute one digit g to each L;
- The symmetric cipher depends on the secret code G;
- The encoding/decoding of plain/cipher texts which consist of this sequence of characters runs exactly or analogously as follows:

a) Generation of an individual "alphabet":

o The characters L of the given set of characters (including a blank character) are consecutively numbered from p1 = 0 to p1 = fin1, resulting in ordinal numbers p1 = 1, 2, 3 etc. with x digits. To each p1 is attributed the corresponding g value of the secret code G.
o The g values thus attributed are cyclically shifted by one unit, two units, and three units, whereby new sequences of numbers are created with the digits g', g" and g"'.
o From the numbers p1 and g, g', g" and g"' which belong to one another, the sequence of composite numbers Zsort is formed:

$$\text{Zsort} = 10\char`^(x+3)*g+10\char`^(x+2)*g'+10\char`^(x+1)*g"+10\char`^x*g"'+p1$$

o The sequence of the numbers Zsort is ordered according to increasing size, and is consecutively numbered in this arrangement from p2 = 0 to p2 = fin1. Ordinal numbers p2 = 1, 2, 3 etc. with x digits are thus created; from the adjusted p1 results the permutation P1 of these numbers, and from the characters L of the given set of characters an individual "alphabet".
o If the numbers p1 are again ordered according to increasing size, one obtains from the numbers p2 the permutation P2 of these numbers.

b) Substitution:

o All the characters L of the original text (including the blank characters) are consecutively numbered from p1* = 0 to p1* = fin2. Ordinal numbers p1* = 1, 2, 3 etc. with x digits are thus created. To each p1* is attributed the corresponding g value of the secret code G.
o According to the method described under a), the two interdependent permutations P1* (p2* adjusted) and P2* (p1* adjusted) are created with the g values.

o To each character L of the original text, its ordinal number p2 in the individual "alphabet" and the numbers p2* of the P2* permutation, are attributed.

o Modular addition of the values p2 and p2* results in the numbers p3= Mod(p2+p2*; fin1) which are defined as ordinal numbers of the substituted characters Ls in the individual "alphabet".

o The numbers p3 are replaced by the characters Ls which are attributed to them in the individual "alphabet".

c) Transposition:

o The substituted characters Ls are transposed by application of the P1* permutation (rearrangement of the numbers p2* in ascending sequence), resulting in the cipher text with the characters Lk.

d) Decoding:

o The characters Lk are re-transposed by application of the P2* permutation (rearrangement of the numbers p1* in ascending sequence), resulting in the sequence of the characters Ls.

o Each Ls is replaced by its ordinal number in the individual "alphabet".

o Modular subtraction p2 = p3 - p2* results in the ordinal number of the original character L.

o The number p2 is replaced by L. The result is the original plain text..

9. Method according to one or more of the claims 1 to 8, **characterised in that** the secret code G with its digits g, is stored on a data carrier as a cipher value, and is reconstituted before the use, as follows:

- the sequence of the digits g is subdivided into continuous groups;
- each group of digits is attributed to one of the constituents B of a number of person-specific associations A⇔B;
- the constituents A of the associations are put in order, and the constituents B, together with their group of digits g, are mixed and stored on the data carrier;
- for reconstitution, the data carrier is laid into a reading device, and the constituents A appear on a display one after another, and the constituents B simultaneously;
- the owner of the secret code G attributes the correct B to each appearing A;
- from the sequence of digit g groups thus adjusted, the secret code G is reconstituted;
- after each reconstitution, the associations A⇔B are mixed without their groups of digits g, whereas the latter remain in their sequence;
- each group is attributed to one of the constituents B of the person-specific associations A⇔B in their new arrangement, and so on.

**Revendications**

1. Méthode de vérification de l'intégrité et de la qualité d'auteur de textes par laquelle

- chaque participant est équipé au moins :

  ➤ d'un code K le caractérisant;
  ➤ d'un nombre secret individuel G ;
  ➤ et d'un algorithme à sens unique qui dépend du nombre secret G ;

- il existe un module qui ne peut être espionné et qui est accessible par télécommunication, contenant au moins :

  ➤ une base de données dans laquelle est rangé, pour chaque participant, un couple de valeurs composé de son code K et de son nombre secret individuel G, lequel ne peut être entré dans la base de données que lorsque le participant a préalablement apporté la preuve de son identité et du code K par-devant une instance digne de confiance, laquelle fournit, après qu'on a entré un certain code K, le nombre secret G correspondant dans le module ;
  ➤ et l'algorithme à sens unique dépendant du nombre secret G ;

- un participant calcule, à partir des caractères du texte et de leur rangement, avec son nombre secret G et son algorithme à sens unique, un nombre caractéristique identifiant le texte et l'identifiant lui-même, et repère le texte d'une mention comportant au moins le nombre caractéristique et son code K ;

- en vue d'une vérification :

  - ➤ le texte accompagné de la mention est transmis au module ;
  - ➤ dans le module, le nombre secret G est divulgué au moyen du code K ;
  - ➤ le nombre caractéristique est recalculé, dans le module, à l'aide du nombre secret G et de l'algorithme à sens unique, et comparé, d'une manière imperceptible de l'extérieur, avec l'original du nombre caractéristique entré dans le module ;
  - ➤ le résultat de la comparaison est communiqué au participant qui a lancé la vérification.

**2.** Méthode conforme à la revendication 1, **caractérisée par le fait que** :

- un participant commence par calculer, à partir des caractères du texte et de leur rangement, avec un algorithme à sens unique, un nombre caractéristique S identifiant le texte puis, à partir de ce dernier, avec son nombre secret G et son algorithme à sens unique, un nombre caractéristique U l'identifiant lui-même, et repère le texte d'une mention comportant au moins le nombre caractéristique S, le nombre caractéristique U et son code K ;
- en vue d'une vérification :

  - ➤ le participant qui a lancé la vérification recalcule, à partir des caractères du texte et de leur rangement, avec l'algorithme à sens unique d'accès général, le nombre caractéristique S identifiant le texte, et le compare avec la valeur indiquée dans la mention ;
  - ➤ la mention est transmise au module ;
  - ➤ dans le module, le nombre secret G est divulgué au moyen du code K ;
  - ➤ au moyen du nombre secret G et de l'algorithme à sens unique, le nombre caractéristique U est recalculé, dans le module, à partir du nombre caractéristique S, et comparé, d'une manière imperceptible de l'extérieur, avec l'original du nombre caractéristique U entré dans le module ;
  - ➤ le résultat de la comparaison est communiqué au participant qui a lancé la vérification.

**3.** Méthode conforme à la revendication 1 ou 2, **caractérisée par le fait que** les nombres secrets G sont entrés de manière codée et y sont mémorisés de manière codée, afin d'être sortis sous cette forme codée en vue d'être activés après l'entrée d'un certain code K dans la base de données et d'être décodés, dans le module, avec un algorithme de cryptage correspondant à cette forme codée.

**4.** Méthode conforme à la revendication 3, **caractérisée par le fait que** les codes K sont également entrés de manière codée et y sont mémorisés de manière codée, et que suite à la présentation d'un certain code K dans le module en vue d'activer le nombre secret G correspondant, ce code K est d'abord codé avec l'algorithme de cryptage utilisé lors de l'entrée dans la base de données en vue du codage des codes K et entré sous cette forme dans la base de données.

**5.** Méthode conforme aux revendications 1 à 4, **caractérisée par le fait que** :

- un participant, en sa qualité d'auteur V, code, avec son nombre secret Gv et un algorithme de cryptage symétrique dépendant de celui-ci, son texte et le code Ke d'un destinataire E pour en faire un texte crypté ;
- en vue d'un décodage :

  - ➤ le texte crypté est transmis au module accompagné du code Kv de l'auteur ;
  - ➤ dans le module, le nombre secret Gv est divulgué au moyen du code Kv ;
  - ➤ dans le module, avec le nombre secret Gv et l'algorithme de cryptage symétrique qui se trouve également dans le module, le texte crypté est décrypté, d'une manière imperceptible de l'extérieur, afin d'obtenir le texte en clair et le code Ke ;
  - ➤ dans le module, le nombre secret Ge est divulgué au moyen du code Ke ;
  - ➤ dans le module, avec le nombre secret Ge et l'algorithme de cryptage symétrique, le texte en clair et le code Kv sont codés, d'une manière imperceptible de l'extérieur, pour obtenir un texte crypté ;
  - ➤ ce texte crypté accompagné du code Ke est transmis au destinataire ;

- le destinataire décode le texte crypté avec son nombre secret Ge et son algorithme de cryptage symétrique pour obtenir le texte en clair et le code Kv.

**6.** Méthode conforme à une ou plusieurs des revendications 1 à 5, **caractérisée par le fait que** le couple de valeurs composé du code K et du nombre secret G d'un nouveau participant, est entré, de manière alternative, dans la base de données, par l'intermédiaire du module, de la manière suivante :

a) Après que l'instance digne de confiance a entré le code K dans le module, un nombre secret G y est automatiquement généré ; il est entré dans la base de données, accompagné du code K, et attribué au participant de manière sûre.

b) L'instance digne de confiance entre le code K dans le système et, séparément, mais dans une étape de processus unique, le nouveau participant entre son nombre secret G. Ensuite, le couple de valeurs parvient dans la base de données.

c) Le nouveau participant code son nombre secret G au moyen d'un algorithme de cryptage asymétrique avant de le transmettre sous cette forme, accompagné de son code K, à l'instance digne de confiance afin qu'il soit entré par celle-ci dans le système ; à l'intérieur du module, le nombre secret G est d'abord décodé avec un algorithme de cryptage asymétrique correspondant qui s'y trouve.

d) Les données qui doivent être entrées dans le module sont codées, avant d'y parvenir, avec un algorithme de cryptage symétrique; à l'intérieur du module, elles sont d'abord décodées avec un algorithme de cryptage symétrique correspondant qui s'y trouve.

**7.** Méthode conforme à la revendication 1 ou 2, **caractérisée par le fait que** :

- le texte se compose d'une série de caractères L ;
- l'algorithme à sens unique dépend d'un nombre C composé des chiffres $c_n$ ;
- à partir de la transformation à sens unique du texte, un nombre B composé des chiffres $b_n$ est calculé, de manière à ce que la quantité de tous les $b_n$ corresponde au nombre soit de tous les L, soit de tous les $c_n$ ;
- comme nombre caractéristique Bt, on utilise une partie de tous les chiffres $b_n$ du nombre B et
- le calcul du nombre caractéristique se déroule exactement ou, en substance, de la manière suivante :

a) Les L sont remplacés par leur nombre ordinal Z dans la série de caractères utilisée ou un autre nombre caractéristique Z.

b) Les Z sont numérotés de n = 0 à n = fin.

c) A partir de la séquence ainsi générée de nombres $Z_n$, les $b_n$ sont calculés, dans une itération simple ou multiple, de n = 0 à n = fin et de n = fin à n =0, au moyen des formules

$$a_n = reste[nombre\ entier\{(Z_n + c_n + r_n)^{c2};10^{c3}\}]$$

$$r_0 = c1$$

$$r_{n+1} = a_n$$

$$b_n = reste(a_n;10)$$

c1, c2 et c3 étant des constantes.

**8.** Méthode conforme à la revendication 5, **caractérisée par le fait que** :

- le texte se compose d'une série de caractères L ;
- le nombre secret G se compose d'au moins autant de chiffres g qu'il le faut pour attribuer à chaque caractère L un chiffre g ;
- l'algorithme de cryptage symétrique dépend du nombre secret G ;
- le codage/décodage de textes en clair/cryptés composés de cette séquence de caractères, se déroule exactement ou, en substance, de la manière suivante :

a) Génération d'un « alphabet » individuel :

o Les caractères L de la série de caractères prédéfinie (y compris un caractère espace) sont numérotés de p1 = 0 à p1 = fin1. On obtient les nombres ordinaux à x chiffres p1 = 1, 2, 3, etc. On affecte à chaque p1 la valeur g correspondante du nombre secret G.

o Les valeurs g affectées sont décalées, de manière cyclique, d'une unité, de deux unités et de trois unités, ce par quoi de nouvelles séquences de nombres composées des chiffres g', g'' et g''' sont créées.

o A partir de p1 et g, g', g'' et g''' correspondants, la séquence de nombres composés Zsort est formée :

$$Zsort = 10^{(x+3)} * g + 10^{(x+2)} * g + 10^{(x+1)} * g' + 10^x * g''' + p1$$

o La séquence de Zsort est classée par ordre croissant et numérotée, dans cette ordre, de p2 = 0 à p2 = fin1. On obtient les nombres ordinaux à x chiffres p2 = 1, 2, 3, etc., à partir des p1 classés la permutation P1 de ces nombres, et à partir des caractères L de la série de caractères prédéfinie un « alphabet » individuel.

o Si les p1 sont de nouveau classés par ordre croissant, on obtient à partir des p2 la permutation P2 de ces nombres.

b) Substitution :

Tous les caractères L du texte d'origine (y compris les caractères espaces) sont numérotés de p1* = 0 à p1* = fin2. On obtient les nombres ordinaux à x chiffres p1 * = 1, 2, 3, etc. La valeur g correspondante du nombre secret G est affectée à chaque p1*.

o Avec les valeurs g, selon la méthode décrite en a), les deux permutations dépendantes l'une de l'autre P1* (pour p2* classé) et P2* (pour p1* classé) sont générées.

o Chaque caractère L du texte d'origine se voit affecter son nombre ordinal p2 dans l'« alphabet » individuel et les chiffres p2* de la permutation P2*.

o Par addition modulaire des valeurs p2 et p2*, on obtient les nombres p3 = reste(p2+p2* ; fin1), qui sont définis comme nombres ordinaux des caractères substitués Ls dans l'« alphabet » individuel.

o Les nombres p3 sont remplacés par les caractères Ls qui leur sont affectés dans l'« alphabet » individuel.

c) Transposition :

o Les caractères Ls substitués sont transposés par application de la permutation P1* (reclassement des p2* en ordre croissant). Le résultat est constitué par le texte crypté accompagné des caractères Lk.

d) Décodage :

o Les caractères Lk sont retransposés par application de la permutation P2* (reclassement des p1* en ordre croissant). On obtient la séquence de caractères Ls.

o Chaque Ls est remplacé par son nombre ordinal dans l'« alphabet » individuel.

o Par soustraction modulaire p2 = p3 - p2*, on obtient le nombre ordinal du caractère d'origine L.

o Le nombre p2 est remplacé par L. Le résultat est constitué par le texte en clair d'origine.

9. Méthode conforme à une ou plusieurs des revendications 1 à 8, **caractérisée par le fait que** le nombre secret G composé des chiffres g est stocké de la manière suivante sur un support d'information et reconstitué avant l'utilisation :

- la séquence de chiffres g est subdivisée en groupes cohérents ;
- chaque groupe est affecté à un composant B d'un nombre d'associations A⇔B spécifique à la personne ;
- les composants d'association A sont classés et les composants B sont stockés de manière mélangée, sur le support, avec leur groupe de chiffres g ;
- pour la reconstitution, suite à l'insertion du support dans un lecteur, les composants d'association A deviennent visibles les uns après les autres et les composants mélangés B deviennent visibles simultanément sur un affichage ;

- le propriétaire du nombre secret G affecte le B correcte au A affiché ;
- le nombre G est composé de la séquence ainsi classée de groupes de chiffres g ;
- après chaque reconstitution, les associations A⇔B sont mélangées sans leur groupe de chiffres g, tandis que ces dernières demeurent dans leur séquence ;
- chaque groupe est affecté à un composant B des associations A⇔B spécifiques à la personne dans leur nouveau classement, et ainsi de suite.

EP 1 180 276 B1

(1) **Abb. 1: Numerisches Impressum**

(2) **Erzeugung**

(3) Text T = Folge von Schriftzeichen L → (4) Jedes Zeichen L wird durch eine Zahl Z ersetzt → (5) Folge von Zahlen Z → (6) Einwegalgorithmus

→ (11) Textsiegel S = 04381 80478 53911 → (10) Einwegalgorithm. mit individueller Geheimzahl G → (9) Numerische Unterschrift U = 42866 39105 82053 → (8) Kennung K = 72085 33172 74938 →

(7) Numerisches Impressum
K = 72085 33172 74938
S = 04381 80478 53911
U = 42866 39105 82053

(12) **Verifizierung**

(13) Numerisches Impressum
K = 72085 33172 74938
S = 04381 80478 53911
U = 42866 39105 82053

→ (14) **Modul**
K > G
G // S > U*
U // U*

→ (15) Impressum gültig oder Impressum ungültig

# Abbildung 2:
# Umverschlüsselung im Modul

vom Verfasser

$\beta[Kv, KrGv(T, Ke)]$

| Trennen | Kv |

$KrGv(T, Ke)$

| Symmetrische Entschlüsselung | Gv |

$[T, Ke]$

| Trennen | Ke |

$T$

| Verbinden | Kv |

$[T, Kv]$

| Symmetrische Verschlüsselung | Ge |

$KrGe(T, Kv)$

| Verbinden | Ke |

$[Ke, KrGe(T, Kv)]$

zum Empfänger

# Abbildung 3:
# Trennung der Datenbank
# vom Restmodul

$\alpha_1[K, G]$

Einbringen eines
neuen Wertepaares

Trennen

$K$      $G$

| K verschlüsseln | G verschlüsseln |

$K_{kr}$      $G_{kr}$

Verbinden

$\alpha_2[K_{kr}, G_{kr}]$

Aktivieren von G
durch Eingeben von K

Datenbank
$K_{kr} \leftrightarrow G_{kr}$

$K_{kr}$   K verschlüsseln   $K$

$G_{kr}$   Gkr entschlüsseln   $G$

# Abb. 4: Originaler Schriftzeichensatz

| L | A | a | B | b | C | c | D | d | E | e | F | f | G | g | H | h | I | i | J | j | L |
|---|---|---|---|---|---|---|---|---|---|---|---|---|---|---|---|---|---|---|---|---|---|
| n | 00 | 01 | 02 | 03 | 04 | 05 | 06 | 07 | 08 | 09 | 10 | 11 | 12 | 13 | 14 | 15 | 16 | 17 | 18 | 19 | n |
| L | K | k | L | l | M | m | N | n | O | o | P | p | Q | q | R | r | S | s | T | t | L |
| n | 20 | 21 | 22 | 23 | 24 | 25 | 26 | 27 | 28 | 29 | 30 | 31 | 32 | 33 | 34 | 35 | 36 | 37 | 38 | 39 | n |
| L | U | u | V | v | W | w | X | x | Y | y | Z | z | ß | Ä | ä | Ö | ö | Ü | ü | 1 | L |
| n | 40 | 41 | 42 | 43 | 44 | 45 | 46 | 47 | 48 | 49 | 50 | 51 | 52 | 53 | 54 | 55 | 56 | 57 | 58 | 59 | n |
| L | 2 | 3 | 4 | 5 | 6 | 7 | 8 | 9 | 0 | * | + | - | / | # | . | , | : | ; | ! | ? | L |
| n | 60 | 61 | 62 | 63 | 64 | 65 | 66 | 67 | 68 | 69 | 70 | 71 | 72 | 73 | 74 | 75 | 76 | 77 | 78 | 79 | n |
| L | „ | ` | § | $ | % | & | ( | ) | = | > | < | [ | ] | \| | { | } | Σ | ç | @ |  | L |
| n | 80 | 81 | 82 | 83 | 84 | 85 | 86 | 87 | 88 | 89 | 90 | 91 | 92 | 93 | 94 | 95 | 96 | 97 | 98 | 99 | n |

# Abb. 5: Individuelles "Alphabet"

| L | n | @ | A | N | ç | 1 | G | $ | v | C | 9 | w | D | 3 | u | j | < | : | O |  | L |
|---|---|---|---|---|---|---|---|---|---|---|---|---|---|---|---|---|---|---|---|---|---|
| n | 00 | 01 | 02 | 03 | 04 | 05 | 06 | 07 | 08 | 09 | 10 | 11 | 12 | 13 | 14 | 15 | 16 | 17 | 18 | 19 | n |
| L | h | ( | + | . | t | 8 | g | % | K | [ | q | ö | L | \| | S | y | W | X | I | ) | L |
| n | 20 | 21 | 22 | 23 | 24 | 25 | 26 | 27 | 28 | 29 | 30 | 31 | 32 | 33 | 34 | 35 | 36 | 37 | 38 | 39 | n |
| L | - | H | & | * | 5 | Q | ? | # | E | B | c | 0 | 4 | o | Z | P | p | ! | M | } | L |
| n | 40 | 41 | 42 | 43 | 44 | 45 | 46 | 47 | 48 | 49 | 50 | 51 | 52 | 53 | 54 | 55 | 56 | 57 | 58 | 59 | n |
| L | ` | F | 2 | i | / | = | z | m | Σ | ü | U | Ü | s | 6 | f | § | J | > | ß | d | L |
| n | 60 | 61 | 62 | 63 | 64 | 65 | 66 | 67 | 68 | 69 | 70 | 71 | 72 | 73 | 74 | 75 | 76 | 77 | 78 | 79 | n |
| L | V | , | b | T | Ä | Ö | a | ; | k | ] | R | 1 | { | x | " | e | 7 | ä | r | Y | L |
| n | 80 | 81 | 82 | 83 | 84 | 85 | 86 | 87 | 88 | 89 | 90 | 91 | 92 | 93 | 94 | 95 | 96 | 97 | 98 | 99 | n |

## Abb. 6: Inhalt des Rasters vor dem Verschlüsseln

Kv

| 0 8 2 7 2 | 0 4 2 3 7 | 7 7 2 3 3 | 7 9 0 8 1 |

Text

| 00 | BEHERZIGUNG |
| 01 | Ach, was soll der Mensch verlangen? |
| 02 | Ist es besser, ruhig bleiben? |
| 03 | Klammernd fest sich anzuhangen? |
| 04 | Ist es besser, sich zu treiben? |
| 05 | Soll er sich ein Häuschen bauen? |
| 06 | Soll er unter Zelten leben? |
| 07 | Soll er auf die Felsen trauen? |
| 08 | Selbst die festen Felsen beben. |
| 09 | Eines schickt sich nicht für alle! |
| 10 | Sehe jeder, wie er`s treibe, |
| 11 | sehe jeder, wo er bleibe, |
| 12 | und wer steht, dass er nicht falle! |
| 13 | Goethe |

U ... Ke

| 14 | 5 9 8 5 2 | 8 2 2 7 3 | 9 6 1 8 5 | 4 3 6 4 4 | 7 6 6 3 1 | 0 8 9 7 6 | 7 6 0 3 3 | 7 3 1 9 9 |

## Abb. 7: Inhalt des Rasters nach dem Verschlüsseln

Kv

| 0 8 2 7 2 | 0 4 2 3 7 | 7 7 2 3 3 | 7 9 0 8 1 |

KrGv{T, U(S), Ke}

| 00 | / f x . 8 } % ç M [ ö $ L | = % H ö u „ f H . h Q ? # E B { b 4 v ö : p | q |
| 01 | , F 2 S * z 9 b Σ E L u / 6 x 0 4 { ß d Y S y P Ä E 2 ; k h R 7 % r „ e 7 ã 0 |
| 02 | 4 n G P Y ç 7 G u a ç a w D u + ü 0 O t h ã < . t 8 ( V } 1 A 8 3 u S $ W n 1 |
| 03 | b m v & * 5 Q + @ E B Q q j o Z P L k w } / z m k / H z q 5 U U I g 6 c V J p + |
| 04 | P V M b % X / a ; , ] ü s { x z e p ä r F J @ ã ç V 1 T $ ] 9 1 g Ä J u Σ 8 : „ |
| 05 | s h ( + . t ü ö Ü K [ q r L C j y D X I ) N H O 3 ? + | P 7 g 0 4 [ $ L p 9 M |
| 06 | g L 1 j y O L | Σ - ü u ö j f f 0 J - Ä 1 , M T , Ö = c k ] : + 4 ü „ g R ß Y |
| 07 | V d @ A N e p K & V C H Q D ] u ( # + O 7 n § . t 8 A Y K [ G ö O m G y Y & S |
| 08 | ) - H 1 + < Q @ g E - c . u o Z 1 p ! B } H u 2 5 / C Y M # ü U 4 o y v $ [ > Z |
| 09 | P V , ; < Ü z 2 } k ] R U { x U Ü l ä & V J b A v z , } Q A H b ß D ] R I < : O |
| 10 | u T ( B m t @ h z K 5 q $ J 8 S O W X I { - H & * ç Q ? n - B c 0 d o } ö L | M |
| 11 | } 3 - 2 ) : H C m ! ü 0 Ü 8 6 f v J q + G V , b T R ! S ; ü U c l { V e e § 6 r |
| 12 | Y n @ A Ä g s G $ ; e ) w D , R ; Z d O Σ ( B . n 8 g N $ [ q $ „ u S / W 3 | |
| 13 | „ Ä H . Σ 5 t ? # j V 9 0 G o : Y p ! 8 y , F 2 < / H z ? P . . Ü o 6 [ J J > ä |
| 14 | d , 8 y T Ö ) U J L ] R s { „ n P s ä r H d 7 A N V W @ $ V c 9 w D - a l { : O |

## Abbildung 8: Formular für Email-Überweisung

| | Empfänger | | | | | | | | | | | | | | | | | | | | | |
|---|---|---|---|---|---|---|---|---|---|---|---|---|---|---|---|---|---|---|---|---|---|---|
| 01 | P | L | U | T | A | - | G | M | B | H | @ | t | - | o | n | l | i | n | e | . | d | e |

DM oder EUR    Betrag

| | | | | | | | | | | | | | |
|---|---|---|---|---|---|---|---|---|---|---|---|---|---|
| 02 | E | U | R | | - | - | - | 7 | 4 | 2 | 1 | , | 0 | 0 |

Austellungsdatum                    Uhrzeit

| | | | | | | | | | | | | | | | |
|---|---|---|---|---|---|---|---|---|---|---|---|---|---|---|---|
| 03 | 1 | 4 | - | 0 | 9 | - | 1 | 9 | 9 | 9 | | 1 | 4 | - | 2 | 3 |

Auftraggeber

| | | | | | | | | | | | | | | | | | | | | |
|---|---|---|---|---|---|---|---|---|---|---|---|---|---|---|---|---|---|---|---|---|
| 04 | H | . | H | a | n | n | e | m | a | n | n | @ | t | - | o | n | l | i | n | e | . | d | e |

Impressum des Auftraggebers

| | | | | | | | | | | | | | | | |
|---|---|---|---|---|---|---|---|---|---|---|---|---|---|---|---|---|
| 05 | K | = | 3 | 7 | 5 | 3 | 1 | 0 | 8 | 4 | 0 | 1 | 6 | 9 | 3 | 2 | 8 |
| 06 | S | = | 8 | 3 | 0 | 2 | 7 | 1 | 1 | 8 | 4 | 9 | 6 | 2 | 8 | 0 | 6 |
| 07 | U | = | 1 | 6 | 0 | 4 | 7 | 3 | 2 | 6 | 9 | 9 | 4 | 6 | 2 | 8 | 3 |

# Abbildung 9: Formular für E-Commerce

|    | 01 | 02 | 03 | 04 | 05 | 06 | 07 | 08 | 09 | 10 | 11 | 12 | 13 | 14 | 15 | 16 | 17 | 18 | 19 | 20 | 21 | 22 | 23 | 24 | 25 |    |
|----|----|----|----|----|----|----|----|----|----|----|----|----|----|----|----|----|----|----|----|----|----|----|----|----|----|----|
| **Kunde: Name, Vorname, Firma, Straße, PLZ, Ort** |||||||||||||||||||||||||||
| 01 | H | a | n | n | e | m | a | n | n |   | H | e | i | n | z |   |   |   |   |   |   |   |   |   |   | 01 |
| 02 |   |   |   |   |   |   |   |   |   |   |   |   |   |   |   |   |   |   |   |   |   |   |   |   |   | 02 |
| 03 | F | r | ü | h | l | i | n | g | s | t | r | a | ß | e |   | 5 |   |   |   |   |   |   |   |   |   | 03 |
| 04 | D | - | 9 | 8 | 7 | 6 | 5 |   | G | r | ü | n | a | u |   |   |   |   |   |   |   |   |   |   |   | 04 |
| **Kontonummer des Kunden** — **Bankleitzahl** |||||||||||||||||||||||||||
| 05 | 5 | 9 | 2 | 7 | 8 | 5 | - | 7 | 2 | 8 |   |   | 6 | 3 | 0 | 1 | 0 | 0 | 5 | 1 |   |   |   |   |   | 05 |
| **bei Kreditinstitut (Sitz)** |||||||||||||||||||||||||||
| 06 | G | i | r | o | b | a | n | k |   | B | e | r | l | i | n | / | S | c | h | ö | n | e | b | . |   | 06 |
| **Lieferant: Name, Vorname, Firma, Straße, PLZ, Ort** |||||||||||||||||||||||||||
| 07 | K | e | m | p | f | m | a | n | n |   | E | r | n | s | t |   |   |   |   |   |   |   |   |   |   | 07 |
| 08 | P | L | U | T | A | - | G | M | B | H |   |   |   |   |   |   |   |   |   |   |   |   |   |   |   | 08 |
| 09 | L | i | n | d | e | n | s | t | r | a | ß | e |   | 4 | 9 |   |   |   |   |   |   |   |   |   |   | 09 |
| 10 | D | - | 7 | 6 | 8 | 9 | 1 |   | U | n | t | e | r | h | a | u | s | e | n |   |   |   |   |   |   | 10 |
| **Kontonummer des Lieferanten** — **Bankleitzahl** |||||||||||||||||||||||||||
| 11 | 3 | 6 | 6 | 1 | 4 | 8 | - | 3 | 8 | 5 |   |   | 7 | 5 | 5 | 6 | 3 | 9 | 5 | 1 |   |   |   |   |   | 11 |
| **bei Kreditinstitut (Sitz)** |||||||||||||||||||||||||||
| 12 | F | i | n | a | n | z | b | a | n | k |   | M | ü | n | c | h | e | n | / | P | e | r | l | . |   | 12 |
| **DM oder EUR** — **Betrag** |||||||||||||||||||||||||||
| 13 | E | U | R |   | - | - | - | 7 | 4 | 2 | 1 | , | 0 | 0 |   |   |   |   |   |   |   |   |   |   |   | 13 |
| **Verwendungszweck** |||||||||||||||||||||||||||
| 14 | B | e | s | t | e | l | l | e |   | A | r | t | i | k | e | l |   | l | a | u | t |   |   |   |   | 14 |
| 15 | K | a | t | a | l | o | g |   | N | r | . | 5 | 4 | 3 | 2 |   | u | n | d |   |   |   |   |   |   | 15 |
| 16 | N | r | . | 9 | 8 | 7 | 6 |   |   |   |   |   |   |   |   |   |   |   |   |   |   |   |   |   |   | 16 |
| 17 |   |   |   |   |   |   |   |   |   |   |   |   |   |   |   |   |   |   |   |   |   |   |   |   |   | 17 |
| **Auftragsdatum** — **Auftragsnummer** |||||||||||||||||||||||||||
| 18 | 1 | 4 | - | 0 | 9 | - | 1 | 9 | 9 | 9 |   |   | - | - | 6 | 8 | 2 | 8 |   |   |   |   |   |   |   | 18 |

**Impressum des Kunden I1** — **Module des**

| 19 | K | = | 3 | 7 | 5 | 3 | 1 | 0 | 8 | 4 | 0 | 1 | 6 | 9 | 3 | 2 | 8 |   | D | E | 0 | 0 | 2 | 19 |
|----|---|---|---|---|---|---|---|---|---|---|---|---|---|---|---|---|---|---|---|---|---|---|---|----|
| 20 | S | = | 5 | 9 | 0 | 3 | 2 | 7 | 8 | 5 | 1 | 3 | 8 | 4 | 9 | 2 | 8 |   | D | E | 0 | 0 | 4 | 20 |
| 21 | U | = | 5 | 7 | 7 | 9 | 2 | 3 | 3 | 8 | 0 | 1 | 4 | 2 | 9 | 5 | 2 |   | D | E | 0 | 0 | 9 | 21 |

**Bearbeitungdatum des Kreditinstituts** — **Bearbeitungsnummer**

| 22 | 1 | 5 | - | 0 | 9 | - | 1 | 9 | 9 | 9 |   |   | 0 | 6 | - | 6 | 3 | 2 |   | 22 |
|----|---|---|---|---|---|---|---|---|---|---|---|---|---|---|---|---|---|---|---|----|

**Impressum des Kreditinstituts I2** — **Module des**

| 23 | K | = | 7 | 3 | 0 | 2 | 5 | 6 | 1 | 8 | 0 | 7 | 9 | 2 | 3 | 1 | 5 |   | D | E | 0 | 0 | 4 | 23 |
|----|---|---|---|---|---|---|---|---|---|---|---|---|---|---|---|---|---|---|---|---|---|---|---|----|
| 24 | S | = | 4 | 8 | 6 | 0 | 4 | 1 | 7 | 5 | 3 | 4 | 8 | 0 | 4 | 2 | 8 |   | D | E | 0 | 0 | 7 | 24 |
| 25 | U | = | 6 | 7 | 4 | 0 | 3 | 8 | 2 | 3 | 9 | 2 | 5 | 0 | 1 | 3 | 6 |   | D | E | 0 | 0 | 8 | 25 |

**Datum der Auftragsbestätigung** — **Bestätigungsnummer**

| 26 | 1 | 6 | - | 0 | 9 | - | 1 | 9 | 9 | 9 |   |   | 2 | 3 | 5 | - | 9 | 9 |   | 26 |
|----|---|---|---|---|---|---|---|---|---|---|---|---|---|---|---|---|---|---|---|----|

**Impressum des Lieferanten I3** — **Module d.**

| 27 | K | = | 7 | 9 | 2 | 0 | 4 | 3 | 8 | 8 | 4 | 1 | 0 | 9 | 6 | 3 | 8 |   | D | E | 0 | 0 | 3 | 27 |
|----|---|---|---|---|---|---|---|---|---|---|---|---|---|---|---|---|---|---|---|---|---|---|---|----|
| 28 | S | = | 0 | 5 | 8 | 5 | 4 | 2 | 8 | 7 | 3 | 6 | 6 | 0 | 2 | 7 | 1 |   | D | E | 0 | 0 | 5 | 28 |
| 29 | U | = | 5 | 8 | 1 | 0 | 4 | 5 | 8 | 4 | 8 | 2 | 6 | 3 | 6 | 8 | 3 |   | D | E | 0 | 0 | 8 | 29 |

|    | 01 | 02 | 03 | 04 | 05 | 06 | 07 | 08 | 09 | 10 | 11 | 12 | 13 | 14 | 15 | 16 | 17 | 18 | 19 | 20 | 21 | 22 | 23 | 24 | 25 |
|----|----|----|----|----|----|----|----|----|----|----|----|----|----|----|----|----|----|----|----|----|----|----|----|----|----|